# EUROPÄISCHE PATENTANMELDUNG

(11) **EP 2 829 338 A2**
(43) Veröffentlichungstag der Anmeldung: **28.01.2015**
(21) Anmeldenummer: 14169864.7
(22) Anmeldetag: 26.05.2014
(51) Int. Cl.: B22F 3/105, B28B 1/00, B29C 67/00

(54) **Laserauftragsvorrichtung sowie Verfahren zur Erzeugung eines Bauteils mittels direktem Laserauftrag**

(30) Priorität: 24.07.2013 DE 102013214493
(71) Anmelder: Rolls-Royce Deutschland Ltd & Co KG, 15827 Blankenfelde-Mahlow (DE)
(72) Erfinder: Clemen, Carsten, 15749 Mittenwalde (DE)
(74) Vertreter: Hoefer & Partner

(57) **Zusammenfassung**

Die Erfindung bezieht sich auf eine Laserauftragsvorrichtung mit einem Maschinenbett 1, auf dessen Oberfläche ein Pulvermaterial 5 auftragbar ist, sowie mit zumindest einem ersten Laser 2 zum schichtweise Aufschmelzen des Pulvermaterials 5, dadurch gekennzeichnet, dass zumindest ein zweiter Laser 6 zum schichtweise Aufschmelzen des Pulvermaterials 5 vorgesehen ist, wobei der zweite Laser 6 mit einer höheren Leistung als der erste Laser 2 versehen ist, sowie ein Verfahren zur Erzeugung eines mit einer Stützstruktur versehenen Bauteils 3.

## Beschreibung

Die Erfindung bezieht sich auf eine Laserauftragsvorrichtung mit einem Maschinenbett, auf dessen Oberfläche ein Pulvermaterial auftragbar ist, welches schichtweise mittels eines Lasers aufschmelzbar ist. Weiterhin bezieht sich die Erfindung auf ein Verfahren zur Erzeugung eines Bauteils mittels eines Laserauftragsverfahrens (DLD, Direct Laser Depositioning).

Mittels eines schichtweisen Laserschmelzverfahrens ist es möglich, ein Bauteil aus einem metallischen, keramischen oder nicht-metallischen Pulvermaterial schichtweise zu erzeugen. Das Pulvermaterial wird dabei mittels eines Lasers schichtweise geschmolzen, so dass sich ein schichtweiser Aufbau des Bauteils ergibt.

DLD-Vorrichtungen umfassen neben einer Hülle, einer Steuerung, einem Materialvorrat für das Pulvermaterial und einer Materialbereitstellungsvorrichtung ein Maschinenbett, auf dem das Pulvermaterial schichtweise platziert und schichtweise bearbeitet wird. Weiterhin ist zumindest ein Laser vorgesehen, welcher das Pulvermaterial schichtweise schmilzt und so das Bauteil aufbaut. Bedingt durch den schichtweisen Auftrag des Pulvermaterials ist das Bett bei Beendigung des Herstellungsvorganges vollständig mit Pulvermaterial gefüllt, wobei das schichtweise erzeugte Bauteil in das restliche Pulvermaterial eingebettet ist.

Abhängig von der Geometrie des zu erzeugenden Bauteils ist es erforderlich, Stützstrukturen zu erzeugen, um Überhänge des Bauteils abzustützen. Hierdurch werden Verformungen des Bauteils bei dessen schichtweisem Aufbau verhindert. Die Stützstruktur wird nachfolgend von dem fertigen Bauteil abgetrennt und entsorgt.

Es ist bekannt, mehrere Laser gleichzeitig zu verwenden, um beispielsweise mehrere Bauteile gleichzeitig erzeugen zu können.

Bei den vorbekannten Vorgehensweisen ist es nachteilig, dass mittels desselben Lasers sowohl das Bauteil als auch die Stützstruktur hergestellt werden. Die Herstellung des Bauteils erfordert eine optimale Qualität, insbesondere hinsichtlich der Oberflächengüte, der Porosität sowie weiterer Materialeigenschaften. Bei den bekannten Vorgehensweisen wird somit die Stützstruktur mit derselben Qualität erzeugt, wie das Bauteil selbst.

Die Herstellung des Bauteils ist abhängig von der Menge an Pulvermaterial, das in einer Zeiteinheit verarbeitet (geschmolzen) wird. Mit einem stärkeren Laser kann somit eine größere Menge Pulvermaterial geschmolzen werden. Dies führt zu einer Verkürzung der Herstellungszeiten, welche zu einer Kostenreduzierung führt. Die Qualität eines Bauteils hängt jedoch stark von der Schmelzgeschwindigkeit des Pulvermaterials ab. Eine höhere Geschwindigkeit führt dabei zu einer geringeren Qualität des Bauteils. Aus diesem Grunde ist es nicht möglich, die Herstellungsgeschwindigkeit des Bauteils beim Laserauftragsverfahren beliebig zu erhöhen.

Der Erfindung liegt die Aufgabe zugrunde, eine Vorrichtung sowie ein Verfahren der eingangs genannten Art zu schaffen, welche bei einfachem Aufbau und einfacher, kostengünstiger Ausgestaltung die Herstellung hochqualitativer Bauteile bei reduzierten Fertigungszeiten ermöglichen.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindung.

Erfindungsgemäß ist somit vorgesehen, dass zumindest ein erster Laser zum schichtweisen Aufschmelzen des Pulvermaterials zur Herstellung des Bauteils verwendet wird, während zumindest ein zweiter Laser verwendet wird, um die Stützstruktur schichtweise aufzubauen. Dabei ist erfindungsgemäß vorgesehen, dass der zweite Laser mit einer höheren Leistung versehen ist, als der erste Laser. Erfindungsgemäß werden somit zwei unterschiedliche Laser mit unterschiedlicher Leistung verwendet, um zwei unterschiedliche Arbeitsergebnisse zu erhalten, nämlich ein hochqualitatives Bauteil und eine Stützstruktur mit geringerer Qualität. Für die Erzeugung der Stützstruktur mit minderer Qualität wird somit eine höhere Laserleistung benötigt. Diese kann erfindungsgemäß dadurch erzielt werden, dass Laser mit unterschiedlicher Leistung verwendet werden. Die Leistungsunterschiede können bis zu einem Faktor von 5 betragen. Erfindungsgemäß ist es möglich, die höhere Leistung des Lasers zur Erzeugung der Stützstruktur so zu nutzen, dass mittels dieses Lasers in gleicher Zeiteinheit größere Volumina an Pulvermaterial aufgeschmolzen werden. Dies kann beispielsweise durch eine entsprechende Fokussierung des Lasers sichergestellt werden. Auch ist es möglich, die Laser mit unterschiedlichen Betriebszeiten zu verwenden, so dass der zweite Laser zur Erzeugung der Stützstruktur jeweils nur für einen kürzeren Zeitraum mit hoher Schmelzgeschwindigkeit und damit niedrigerer Qualität eingesetzt wird. Auch ist es möglich, die Vorrichtung sowie das Verfahren so auszubilden, dass der Laser zur Erzeugung der Stützstruktur relativ zu dem Maschinenbett so bewegt wird, dass er in der gleichen Zeiteinheit eine größere Fläche an Pulvermaterial aufschmilzt, wie der Laser zur Erzeugung des hochqualitativen Bauteils.

Da häufig bei der Erzeugung komplexer Bauteile das Volumen der Stützstruktur und das Volumen des Bauteils sehr ähnlich sind, kann sich durch die erfindungsgemäße Vorgehensweise eine erhebliche Zeitersparnis für den Herstellungsvorgang ergeben. Diese kann beispielsweise bis zu 40%, verglichen mit der aus dem Stand der Technik bekannten Vorgehensweise, betragen. Dies führt zu einer entsprechenden Kostensenkung bei der Herstellung des Bauteils.

Bevorzugterweise wird mittels einer Maschinensteuerung gewährleistet, dass sich der erste und der zweite Laser nicht gegenseitig behindern, wenn diese parallel zueinander arbeiten. Es ist durch den Parallelbetrieb der Laser somit möglich, effektiv in kurzer Zeitdauer komplexe Bauteile und entsprechende Stützstruktur zu erzeugen.

Erfindungsgemäß können die Laser in geeigneter Weise zueinander angeordnet sein, beispielsweise parallel. Es ist jedoch auch möglich, die Laser hinsichtlich ihrer Wirkachsen in einem Winkel zueinander anzuordnen.

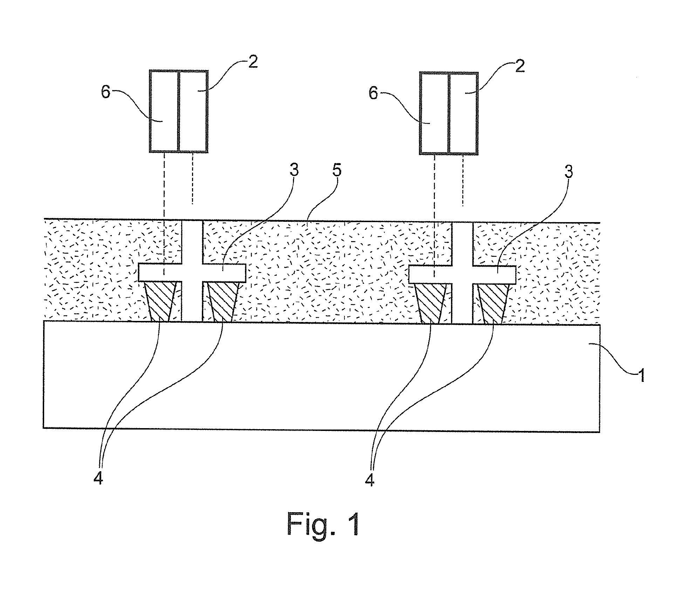

Im Folgenden wird die Erfindung anhand eines Ausführungsbeispiels in Verbindung mit der Zeichnung beschrieben. Dabei zeigt die einzige Fig. 1 eine schematische Seitenansicht eines auf einem Maschinenbett erzeugten Bauteils mit einer Stützstruktur.

Die Figur zeigt in schematischer Weise ein Maschinenbett 1, auf welchem sich Pulvermaterial 5 befindet. Die Darstellung der Fig. 1 zeigt in beispielhafter Darstellung ein fertiggestelltes Bauteil 3, welches somit bis zu seiner Oberkante in das Pulvermaterial 5 eingebettet ist. Seitliche Bereiche des Bauteils 3 sind jeweils mittels einer Stützstruktur 4 abgestützt. Oberhalb des Pulvermaterials 5 befindet sich ein erster Laser 2. Neben dem Laser ist ein zweiter Laser 6 angeordnet.

Zu Beginn der Fertigung wird eine dünne Schicht an Pulvermaterial 5 auf das Maschinenbett 1 aufgetragen und selektiv mittels der beiden Laser 2 und 6 aufgeschmolzen. Der Laser 2 weist dabei eine niedrigere Leistung auf, um das Bauteil 3 mit hoher Qualität zu erzeugen, während der Laser 6 eine höhere Leistung aufweist, um die Stützstruktur 4 mit geringerer Qualität in einem kürzeren Zeitraum zu erzeugen. Beim Übergang zu den seitlich auskragenden Bereichen des Bauteils 3 wird dieses ausschließlich durch den ersten Laser 2 gefertigt, während der zweite Laser 6 nicht mehr zum Einsatz kommt.

Es ergibt sich somit, dass die Fertigung des Bauteils 3 innerhalb eines wesentlich kürzeren Zeitraums erfolgen kann, da die Stützstruktur 4 mittels des zweiten Lasers 6 mit geringerer Qualität innerhalb kürzerer Zeit erzeugt wird.

### Bezugszeichenliste

- 1: Maschinenbett
- 2: erster Laser
- 3: Bauteil
- 4: Stützstruktur
- 5: Pulvermaterial
- 6: zweiter Laser

## Patentansprüche

1. Laserauftragsvorrichtung mit einem Maschinenbett (1), auf dessen Oberfläche ein Pulvermaterial (5) auftragbar ist, sowie mit zumindest einem ersten Laser (2) zum schichtweisen Aufschmelzen des Pulvermaterials (5), wobei zumindest ein zweiter Laser (6) zum schichtweisen Aufschmelzen des Pulvermaterials (5) vorgesehen ist, wobei der zweite Laser (6) mit einer höheren Leistung als der erste Laser (2) versehen ist, **dadurch gekennzeichnet, dass** die Leistung des ersten Lasers (2) zur Erzeugung eines Bauteils (3) und die Leistung des zweiten Lasers (6) zur Erzeugung einer Stützstruktur (4) ausgebildet sind.

2. Vorrichtung nach Anspruch 1, **dadurch gekennzeichnet, dass** die Leistung des ersten Lasers (2) um bis zu einem Faktor von 5 kleiner ist, als die Leistung des zweiten Lasers (6).

3. Vorrichtung nach einem der Ansprüche 1 oder 2, **dadurch gekennzeichnet, dass** der erste (2) und der zweite (6) Laser zur Aufschmelzung derselben Schichtdicke des Pulvermaterials (5) ausgebildet sind.

4. Vorrichtung nach einem der Ansprüche 1 bis 3, **dadurch gekennzeichnet, dass** der erste (2) und der zweite (6) Laser unterschiedliche Fokussierungen aufweisen.

5. Verfahren zur Erzeugung eines mit einer Stützstruktur (4) versehenen Bauteils (3) mittels einer Laserauftragsvorrichtung, wobei zumindest ein erster Laser (2) zur schichtweisen Erzeugung eines Bauteils (3) aus einem pulverförmigen Material (5) und zumindest ein zweiter Laser (6) zur schichtweisen Erzeugung einer das Bauteil (3) abstützenden Stützstruktur (4) aus dem pulverförmigen Material (5) verwendet werden, wobei der erste Laser (2) mit einer geringeren Leistung als der zweite Laser (6) betrieben wird.

6. Verfahren nach Anspruch 5, **dadurch gekennzeichnet, dass** mittels des ersten (2) und des zweiten (6) Lasers dieselbe Schichtdicke des pulverförmigen Materials (5) aufgeschmolzen wird.

7. Verfahren nach Anspruch 5 oder 6, **dadurch gekennzeichnet, dass** mittels des zweiten Lasers (6) in der gleichen Zeit eine größere Fläche des pulverförmigen Materials (5) aufgeschmolzen wird, wie mittels des ersten Lasers (2).
